# EUROPÄISCHE PATENTSCHRIFT

(11) **EP 3 530 099 B1**
(45) Veröffentlichungstag und Bekanntmachung des Hinweises auf die Patenterteilung: **15.09.2021**
(21) Anmeldenummer: 18211549.3
(22) Anmeldetag: 11.12.2018
(51) Int. Cl.: A01D 41/127, G01S 17/42, G01S 17/02, G01S 17/88, G01S 7/48

(54) **SELBSTFAHRENDE ERNTEMASCHINE**
SELF-PROPELLED HARVESTER
MOISSONNEUSE AUTOMOTRICE

(30) Priorität: 23.02.2018 DE 102018104207
(43) Veröffentlichungstag der Anmeldung: 28.08.2019
(73) Patentinhaber: CLAAS Selbstfahrende Erntemaschinen GmbH, 33428 Harsewinkel (DE)
(72) Erfinder: Redenius, Jannik, 32361 Pr. Oldendorf (DE); Krause, Thilo, 39249 Glinde (DE)

(56) Entgegenhaltungen:
- EP-A1- 2 591 654
- DE-A1-102011 017 621
- DE-A1-102011 085 380
- DE-A1-102015 118 767

## Beschreibung

Die vorliegende Erfindung betrifft eine selbstfahrende Erntemaschine zum Abernten eines Feldbestands gemäß dem Oberbegriff von Anspruch 1.

Landwirtschaftliche Erntemaschinen, zu denen insbesondere selbstfahrende Erntemaschinen wie Mähdrescher zählen, weisen regelmäßig verschiedene Arbeitsaggregate auf, die bei der Verarbeitung von Erntegut mit wechselnden Parametern betrieben werden können. Für einen optimalen Betrieb empfiehlt es sich, die Ansteuerung der Arbeitsaggregate in Abhängigkeit von verschiedenen Randbedingungen einzustellen, wozu insbesondere die Bestandsdichte des abzuerntenden Feldbestands zählt. Die sensorgestützte Ermittlung einer Führungsgröße, wie etwa der Bestandsdichte des abzuerntenden Feldbestands steht vorliegend im Vordergrund.

Die bekannte selbstfahrende Erntemaschine (DE 10 2008 043 716 A1), von dem die Erfindung ausgeht, weist eine der Ermittlung der Bestandsdichte eines von einer Erntemaschine abzuerntenden Feldbestands dienende Sensoranordnung auf. Die Sensoranordnung sendet periodisch Sendepulse aus elektromagnetischen Sendestrahlen in verschiedenen Senderichtungen auf den Feldbestand aus. Die Sendepulse werden am Feldbestand reflektiert und als Echopulse von der Sensoranordnung empfangen. Dadurch, dass die Strahldivergenz der Sendestrahlen gering ist, ergibt sich im Bereich der Pflanzen ein entsprechend geringer Strahlquerschnitt. Aus der Laufzeit der Sendepulse zu den Echopulsen ergibt sich der Abstand zwischen der Sensoranordnung und der reflektierenden Pflanze. Je nachdem, ob ein Sendestrahl an einer vorderen Pflanze reflektiert wird oder an den vorderen Pflanzen vorbei auf eine bestandsinnere Pflanze trifft und von dieser reflektiert wird, ergeben sich unterschiedliche Abstandswerte. Aus der statistischen Verteilung der ermittelten Abstandswerte, insbesondere aus der Standardabweichung für die Abstandswerte, lässt sich ein Wert für die Bestandsdichte ermitteln, der für die Einstellung von Maschinenparametern genutzt wird.

Nachteilig bei der bekannten Erntemaschine ist die Notwendigkeit der Durchführung einer Vielzahl von Messungen, bevor überhaupt ein Wert für die Bestandsdichte mit akzeptabler Genauigkeit geschätzt werden kann. Verlässliche Informationen zu der Bestandsdichte liegen damit erst zu einem relativ späten Zeitpunkt vor, was im Hinblick auf eine Einstellung der Maschinenparameter in Echtzeit kritisch sein kann.

Ähnlich ist es bei der in der EP 1 271 139 A2 offenbarten selbstfahrenden Erntemaschine, bei dem die Intensität der Echosignale, also die Strahlleistung der Echosignale, ein Indiz für die Bestandsdichte des Feldbestands bereitstellen soll.

Eine selbstfahrende Erntemaschine nach dem Oberbegriff von Anspruch 1 ist aus DE 10 2015 118767 A1 bekannt.

Der Erfindung liegt das Problem zu Grunde, die bekannte selbstfahrende Erntemaschine derart auszugestalten und weiter zu bilden, dass die zur Einstellung der Maschinenparameter genutzte Bestandsdichte zu einem früheren Zeitpunkt vorliegt.

Das obige Problem wird bei einer selbstfahrenden Erntemaschine gemäß dem Oberbegriff von Anspruch 1 durch die Merkmale des kennzeichnenden Teils von Anspruch 1 gelöst.

Vorschlagsgemäß wird zunächst einmal davon ausgegangen, dass die Erntemaschine einen Fahrantrieb und/oder mehrere Arbeitsaggregate aufweist, der bzw. die mittels der Steuerungsanordnung ansteuerbar sind.

Wesentlich ist nun die grundsätzliche Erkenntnis, dass mit einem einzigen Sendestrahl mehrere Teil-Echopulse erzeugbar sind, aus denen sich der resultierende Echopuls zusammensetzt. Dies geht auf eine Mehrfachreflexion des jeweiligen Sendestrahls zurück, nämlich einerseits an einer vorderen Pflanze und andererseits an mindestens einer bestandsinneren Pflanze. Hierfür ist der Sendestrahl mit einer relativ großen Strahldivergenz auszustatten, so dass sich der Sendestrahl in unterschiedliche Teilstrahlen aufteilen kann. Die Teilstrahlen ergänzen sich hier zu dem Strahlquerschnitt des Sendestrahls.

Die unterschiedlichen Teilstrahlen werden zueinander zeitversetzt an hintereinanderliegenden Pflanzen des Feldbestands reflektiert, so dass sich der jeweils resultierende Echopuls aus entsprechend zeitversetzten Teil-Echopulsen zusammensetzt.

Vorschlagsgemäß ist weiter erkannt worden, dass diese zeitversetzte Reflexion, die sich in dem zeitlichen Verlauf des resultierenden Echopulses niederschlägt, Aufschluss über die Bestandsdichte geben kann. Entsprechend wird vorschlagsgemäß zunächst ganz allgemein vorgeschlagen, dass mittels der Steuerungsanordnung basierend auf einem zeitlichen Zusammenhang innerhalb des resultierenden Echopulses ein Wert für die Bestandsdichte ermittelt wird, der in außerordentlich kurzer Zeit vorliegt, wie noch erläutert wird.

Wesentlich für die vorschlagsgemäße Lösung ist schließlich, dass die Steuerungsanordnung den Fahrantrieb und/oder die Arbeitsaggregate basierend auf der ermittelten Bestandsdichte ansteuert.

Mit der vorschlagsgemäßen Lösung lässt sich ein Wert für die Bestandsdichte bereits aus einer einzigen Messung, also mittels eines einzigen Sendepulses, ermitteln. Dies liegt daran, dass die Mehrfachreflexion des Sendepulses Aufschluss über die Eindringlänge des Sendestrahls in den Feldbestandteil liefert, von der sich ein Wert für die Bestandsdichte des Feldbestands ableiten lässt. Damit kann die Anzahl der für die Ermittlung der Bestandsdichte notwendigen Messungen und der Aufwand für die weitere Datenverarbeitung, insbesondere für eine Mittelwertbildung o. dgl., reduziert werden, so dass die Ermittlung der Bestandsdichte in relativ kurzer Zeit möglich ist und damit eine optimale Ansteuerung der Erntemaschine in Echtzeit basierend auf der ermittelten Bestandsdichte möglich ist.

Es darf darauf hingewiesen werden, dass der Begriff "Echopuls" vorliegend weit zu verstehen ist. Darunter ist nicht nur ein zusammenhängender Echopuls, sondern auch ein sich aus mehreren Teilpulsen zusammensetzender Echopuls zu verstehen.

Die bevorzugte Ausgestaltung gemäß Anspruch 2 betrifft eine vorausschauende Ansteuerung des Fahrantriebs und/oder der Arbeitsaggregate basierend auf der ermittelten Bestandsdichte, indem die Steuerungsanordnung zumindest einen Teil der Ansteuerung vornimmt, bevor der der Ermittlung der Bestandsdichte zugrundeliegende Feldbestand in die Erntemaschine einläuft. Dadurch können die Maschinenparameter rechtzeitig auf anstehende Änderungen im Feldbestand hin eingestellt werden.

Bei der weiter bevorzugten Ausgestaltung gemäß Anspruch 3 weist die Sensoranordnung einen Laserscanner auf, der an der Erntemaschine angeordnet ist. Vorzugsweise lässt sich die Senderichtung mittels der Steuerungsanordnung einstellen.

Eine besonders vorteilhafte Verwendung der ermittelten Werte für die Bestandsdichte ergibt sich gemäß Anspruch 4 dadurch, dass die ermittelten Werte für die Bestandsdichte mit den von einer Durchsatzmessanordnung ermittelten Werten abgeglichen werden können. Dadurch lässt sich die Genauigkeit der Durchsatzmessanordnung auf besonders einfache Weise steigern.

Bei der besonders bevorzugten Ausgestaltung gemäß Anspruch 5 ist der zeitliche Zusammenhang, der der Ermittlung des Wertes für die Bestandsdichte zu Grunde liegt, ein Zeitversatz zwischen zwei Teil-Echopulsen, die auf ein und demselben Sendepuls zurückgehen. Bei dem Zeitversatz kann es sich beispielsweise um die Pulsbreite des resultierenden Echopulses handeln, die gemäß Anspruch 6 vorzugsweise die Gesamtbreite des resultierenden Echopulses im Zeitbereich repräsentiert.

Bei der weiter bevorzugten Ausgestaltung gemäß Anspruch 7 wird der Zeitversatz ermittelt, indem von der Pulsbreite des resultierenden Echopulses eine Normierungsbreite subtrahiert wird, die die Breite des Echopulses im Zeitbereich im Falle einer Einmalreflexion repräsentiert. Damit entspricht der Zeitversatz der jeweiligen Eindringtiefe des Sendestrahls in den Feldbestand hinein. Die Eindringtiefe lässt sich aus dem so ermittelten Zeitversatz nämlich berechnen, indem der Zeitversatz mit der Ausbreitungsgeschwindigkeit der Sendestrahlen multipliziert wird. Der Kehrwert der Eindringtiefe ist dann proportional zu der Bestandsdichte, was Gegenstand von Anspruch 8 ist.

Die weiter bevorzugten Ausgestaltungen gemäß den Ansprüchen 9 und 10 betreffen die Auslegung des Sendestrahls mit einem vergleichsweise großen Strahlquerschnitt, so dass eine Mehrfachreflexion des Sendepulses an unterschiedlichen Pflanzen des Feldbestandes unterstützt wird. Gemäß Anspruch 10 ist der resultierende Messfleck des Sendestrahls so groß, dass Teilstrahlen an einer den Sendestrahl reflektierenden Pflanze vorbei auf eine nachgelagerte Pflanze treffen können.

Bei der ebenfalls bevorzugten Ausgestaltung gemäß Anspruch 11 ist die Sensoranordnung als optischer Abstandssensor ausgestaltet, wobei die Sensoranordnung eingerichtet ist, aus der Laufzeit eines Sendestrahls bis zum Empfang des jeweiligen Echopulses einen Abstand zu ermitteln. Solche Sensoranordnungen werden auch als Time-of-Flight-Sensoranordnungen bezeichnet.

Um die statistische Belastbarkeit der ermittelten Bestandsdichte zu erhöhen, wird gemäß Anspruch 12 vorgeschlagen, dass in einem statistischen Verfahren, insbesondere durch Mittelwertbildung, aus mehreren ermittelten Werten ein Gesamtwert für die Bestandsdichte erzeugt wird.

Die Ermittlung des Wertes für die Bestandsdichte erfolgt nach einer Berechnungsvorschrift, die charakteristische Werte für die Pflanzen des betrachteten Feldbestands berücksichtigt. Darunter fallen insbesondere das Volumen der Pflanzen, die Reflektivität der Pflanzen o. dgl.. Wesentlich nach Anspruch 13 ist die Tatsache, dass die Berechnungsvorschrift in Abhängigkeit vom Typ des abzuerntenden Feldbestands auf einer Anzahl gespeicherter Berechnungsvorschriften ausgewählt oder modifiziert wird. Damit lässt sich die Erntemaschine durch eine einfache softwaremäßige Maßnahme auf einen neuen Typ des Abzuerntenden Feldbestands einstellen, ohne dass irgendwelche mechanische Änderungen vorzunehmen sind.

Aus den Abstandswerten und/oder den Werten für die Bestandsdichte lässt sich gemäß Anspruch 14 eine Bestandshöhe ermitteln. Dies ist beispielweise dadurch möglich, dass die Abstandswerte bei einem stetigen Anheben der zu scannenden Zeilen sprungartig ansteigen, sobald die Kammlinie des Feldbestands erreicht ist. Auf ähnliche Weise kann aus den ermittelten Werten die Lage einer Bestandskante oder die Lage eines Hindernisses ermittelt werden.

Es darf noch darauf hingewiesen werden, dass der Begriff "Bestandsdichte" vorliegend weit zu verstehen ist. Er umfasst jede Angabe, die Aufschluss darüber gibt, welche Pflanzenmenge pro Fläche im Feldbestand vorhanden ist. Dies kann beispielsweise die Anzahl der Pflanzenstängel pro Fläche, das Pflanzenvolumen pro Fläche o. dgl. sein. Der Begriff "Fläche" bezeichnet hier die Fläche des Feldbestands bei einer Draufsicht in vertikaler Richtung.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße Erntemaschine mit einer Sensoranordnung während des Aberntens eines Feldbestands a) in einer Seitenansicht und b) in einer Draufsicht,
- Fig. 2: den Feldbestand gemäß Fig. 1 in einer Ansicht entlang der Fahrtrichtung der Erntemaschine und
- Fig. 3: a) einen Sendepuls der Sensoranordnung gemäß Fig. 1 und b) der dem Sendepuls zugeordnete, resultierende Echopuls.

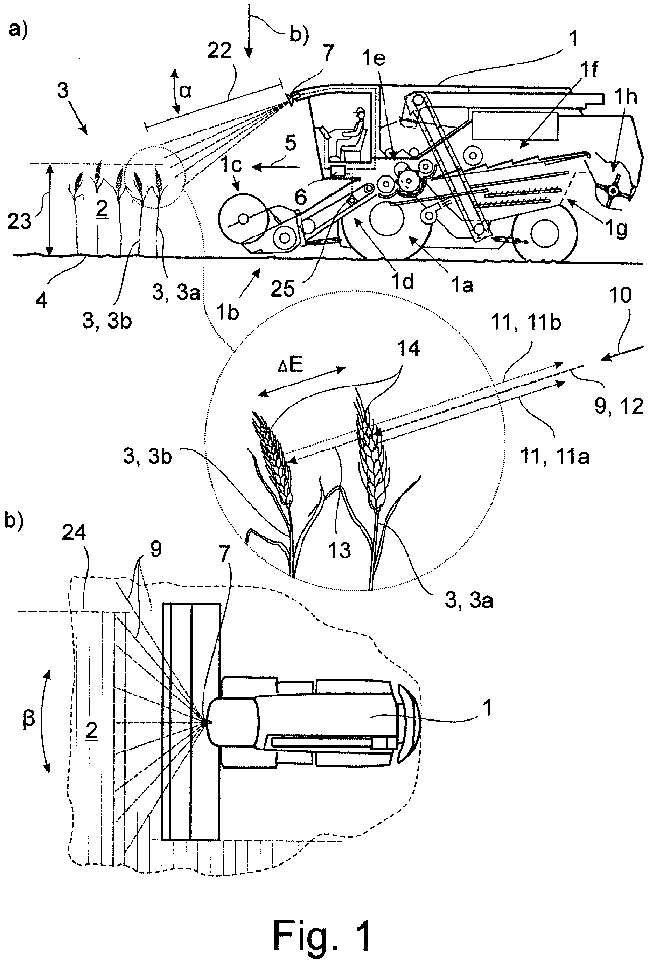

Die in Fig. 1 dargestellte, vorschlagsgemäße Erntemaschine 1 dient dem Abernten eines Feldbestands 2, der aus einer Mehrzahl von Pflanzen 3 besteht. Die Pflanzen 3 des Feldbestands 2 befinden sich auf einem Feldboden 4, wie ebenfalls der Darstellung gemäß Fig. 1 zu entnehmen ist.

Während des Erntebetriebs befindet sich der Feldbestand 2 in Fahrtrichtung 5 der Erntemaschine 1 gesehen vor der Erntemaschine 1. Von der Erntemaschine 1 aus gesehen existieren die vordersten Pflanzen 3a und die bestandsinneren Pflanzen 3b.

Bei der dargestellten landwirtschaftlichen Erntemaschine 1 handelt es sich um eine selbstfahrende Erntemaschine für die Verarbeitung von aufgenommenem Erntegut in Korngut. Die dargestellte Erntemaschine 1 weist einen Fahrantrieb 1a, ein Eingangsaggregat 1b auf, das mit einem austauschbaren Erntevorsatz 1c ausgestattet ist. An den Erntevorsatz 1c schließt sich ein nicht austauschbarer Schrägförderer 1d an, der das über das Eingangsaggregat 1b aufgenommene Erntegut einem Dreschwerk 1e zuführt. Dem Dreschwerk 1e nachgelagert sind eine Abscheidevorrichtung 1f, eine Reinigungsvorrichtung 1g sowie eine Verteileinrichtung 1h zur Verteilung der Nichtkornbestandteile auf dem Feld.

Die Erntemaschine 1 weist eine Steuerungsanordnung 6 und eine Sensoranordnung 7 auf, wobei mittels der Sensoranordnung 7 periodisch Sendepulse 8 aus elektromagnetischen Sendestrahlen in mindestens einer Senderichtung 10 auf den Feldbestand 2 ausgesendet werden. Die Sendepulse 8 werden am Feldbestand 2 reflektiert und als Echopulse 11 von der Sensoranordnung 7 empfangen.

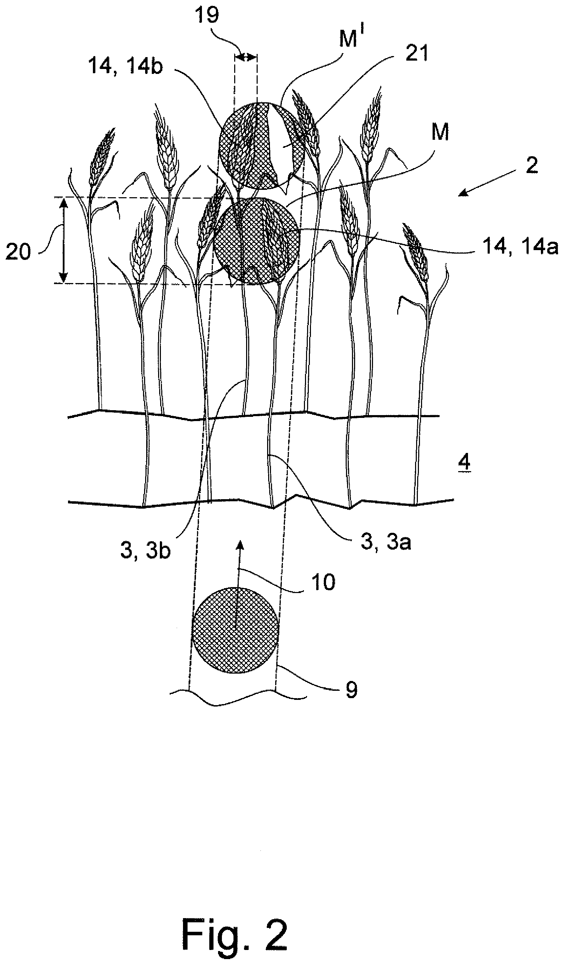

Eine Zusammenschau der Fig. 1 und 2 zeigt, dass für zumindest einen Teil der Sendepulse 8 unterschiedliche Teilstrahlen 12, 13 von in der jeweiligen Senderichtung 10 hintereinander liegenden Pflanzen 3a, 3b des Feldbestands 2 zueinander zeitversetzt reflektiert werden. Der Grund hierfür besteht darin, dass der Teilstrahl 13 in Fig. 1a) verglichen mit dem Teilstrahl 12 einen zusätzlichen Weg, nämlich das zweifache des Wegs ΔE, durchlaufen muss. Der Zeitversatz ergibt sich entsprechend aus der Division des zusätzlichen Wegs durch die Ausbreitungsgeschwindigkeit des Sendestrahls 9.

Fig. 2 zeigt, dass dem Sendestrahl 9 an der Pflanze 3a ein Messfleck zugeordnet ist, der durch den Strahlquerschnitt des Sendestrahls 9 definiert ist. Die Pflanzen 3 des Feldbestands 2 sind hier und vorzugsweise mit Ähren 14 ausgestattet, wobei die Ähre 14a der vorderen Pflanze 3a die Reflexion des ersten Teilstrahls 12 bewirkt, während die Ähre 14b der hinteren Pflanze 3b die Reflexion eines zweiten Teilstrahls 13 bewirkt.

Es darf darauf hingewiesen werden, dass es sich bei der Darstellung des Sendestrahls 9 sowie der Teilstrahlen 12, 13 in der Zeichnung um einen idealisierten Zustand handelt. In einer realen Umgebung ergeben sich meist eine Vielzahl von Teilstrahlen 12, 13 aus ein und demselben Sendestrahl 9, auf die das vorschlagsgemäße Grundprinzip jeweils analog anwendbar ist. Insoweit gelten alle Ausführungen zu den Teilstrahlen 12, 13 für alle anderen, eventuell auftretenden Teilstrahlen entsprechend.

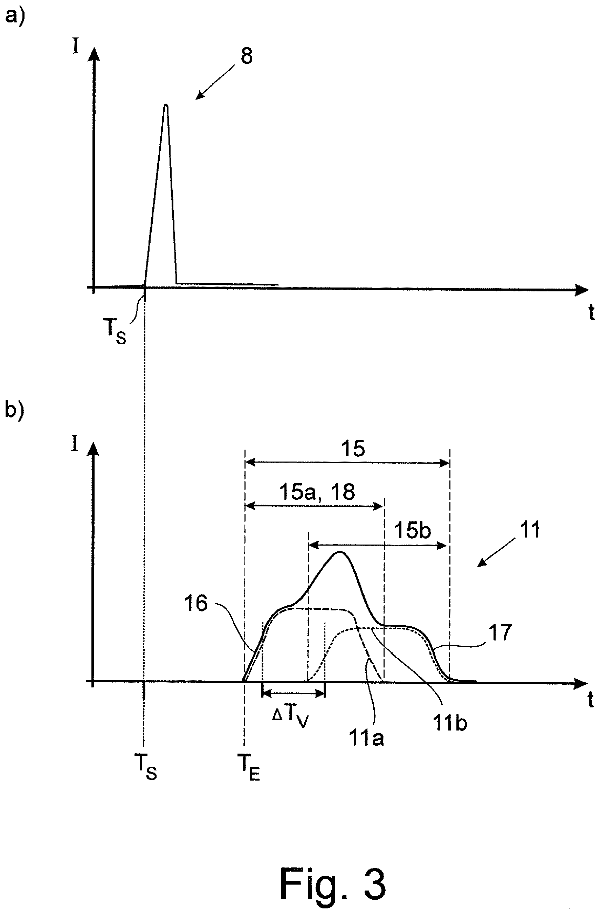

Aus der zeitversetzten Reflexion der Teilstrahlen 12, 13 ergibt sich, dass sich der jeweils resultierende Echopuls 11 aus entsprechend zeitversetzten Teil-Echopulsen 11a, 11b zusammensetzt, wie der Darstellung gemäß Fig. 3 zu entnehmen ist. Dabei zeigt Fig. 3a) zunächst den Sendepuls 8, der von der Sensoranordnung 7 in einer Senderichtung 11 auf den Feldbestand 2 ausgesendet wird. In Fig. 3a) ist der Sendepuls durch seine Strahlleistung I über der Zeit t dargestellt.

Eine entsprechende Darstellung des resultierenden Echopulses 11 findet sich in Fig. 3b). Hier zeigt sich, dass sich der jeweils resultierende Echopuls 11 aus entsprechend zeitversetzten Teil-Echopulsen 11a, 11b zusammensetzt. Bei dem dargestellten und insoweit bevorzugten Ausführungsbeispiel heißt dies, dass sich der resultierende Echopuls 11 aus einer Addition der beiden Teil-Echopulse 11a, 11b ergibt. Der Zeitversatz ΔTv entspricht der oben genannten Zeit, die der Sendestrahl 9 für das zweifache Durchlaufen der Strecke ΔE benötigt. Aus dem in Fig. 3b) gezeigten Verlauf ergibt sich, dass die beiden Teil-Echoimpulse 11a, 11b im Zeitbereich ineinander übergehen. Je nach Struktur des Feldbstands 3 kann es aber auch sein, dass die Teil-Echoimpulse 11a, 11b im Zeitbereich voneinander separiert sind.

Eine Zusammenschau der Fig. 1, 2 und 3 ergibt, dass die Strecke ΔE, die vorliegend auch als "Eindringtiefe" bezeichnet wird, Aufschluss über die Bestandsdichte geben kann. Interessant dabei ist die Tatsache, dass sich die Eindringtiefe ΔE aus dem Zeitversatz ΔTv ableiten lässt. Daher wird zunächst einmal ganz allgemein vorgeschlagen, dass mittels der Steuerungsanordnung 6 basierend auf einem zeitlichen Zusammenhang innerhalb des resultierenden Echopulses 11 ein Wert für die Bestandsdichte ermittelt wird.

Der Fahrantrieb 1a und/oder die Arbeitsaggregate 1b werden mittels der Steuerungsanordnung 6 basierend auf der ermittelten Bestandsdichte angesteuert. Ein besonderer Vorteil dieser Art der Ansteuerung der beteiligten Komponenten besteht darin, dass die Ansteuerung vorausschauend vorgenommen wird, derart, dass erste Maßnahmen zur Ansteuerung bereits getroffen werden können, noch bevor der Feldbestand 2 in die Erntemaschine 1 eingezogen wird.

Neben dem Einsatz des vorschlagsgemäßen Wertes für die Bestandsdichte des Feldbestands 2 für eine vorausschauende Ansteuerung der Erntemaschine 1 ist es grundsätzlich auch denkbar, dass die ermittelte Bestandsdichte dazu dient, eine sensorgestützte Prozessüberwachung innerhalb der Erntemaschine 1 zu optimieren. In diesem Zusammenhang wird vorgeschlagen, dass die Erntemaschine 1 eine Durchsatzmessanordnung 25, insbesondere eine Schichthöhenmessanordnung zur Ermittlung eines Durchsatzes, aufweist und dass mittels der Steuerungsanordnung 6 der ermittelte Durchsatz mit der ermittelten Bestandsdichte abgeglichen wird. Dies bedeutet, dass von dem ermittelten Wert für die Bestandsdichte unter Berücksichtigung der Fahrgeschwindigkeit der Erntemaschine 1 ein Wert für den zu erwartenden Durchsatz berechnet wird und dass dieser berechnete Durchsatz mit dem von der Durchsatzmessanordnung 25 gemessenem Durchsatz abgeglichen wird. Der Begriff "Abgleich" bedeutet hier, dass eine Abweichung der sich gegenüberstehenden Durchsätze in einer entsprechenden Korrektur der Durchsatzmessanordnung 25 oder der Sensoranordnung 7 resultiert. Eine solche Korrektur kann beispielsweise durch einen Korrekturfaktor umgesetzt sein, mit dem der jeweils ermittelte Durchsatz multipliziert wird, um zu dem korrigierten Durchsatz zu gelangen.

Die Sensoranordnung 6 weist vorzugsweise einen Laserscanner auf, der an der Erntemaschine 1 angeordnet ist und der in einem Neigungswinkel α gegenüber der Horizontalen und in einem Scanwinkel β gegenüber der Fahrtrichtung 5 um die Vertikale die Sendestrahlen 9 auf den Feldbestand 2 richtet.

In besonders bevorzugter Ausgestaltung handelt es sich bei dem obigen zeitlichen Zusammenhang um den oben angesprochenen Zeitversatz ΔTv zwischen zwei Teil-Echopulsen 11a, 11b, hier und vorzugsweise zwischen dem ersten TeilEchopuls 11a und dem letzten Teil-Echopuls 11b, die einem Sendepuls 9 zugeordnet sind.

Fig. 3b) zeigt, dass der Zeitversatz ΔTv aus dem resultierenden Echopuls 11 gewissermaßen abgeleitet werden kann. Vorzugsweise ist es so, dass der Zeitversatz ΔTv aus der Pulsbreite 15 des resultierenden Echopulses 11 ermittelt wird, wobei die Pulsbreite15 durch den zeitlichen Abstand zwischen der ersten ansteigenden Pulsflanke 16 und der letzten abfallenden Pulsflanke 17 des Echopulses 11 definiert ist.

Weiter vorzugsweise ist es vorgesehen, dass der Zeitversatz ΔTv ermittelt wird, indem von der Pulsbreite 15 eine Normierungsbreite 18 subtrahiert wird, wobei die Normierungsbreite 18 vorzugsweise definiert ist durch die Pulsbreite 15a des resultierenden Echopulses 11a, die sich bei einer unterstellten Einfachreflexion des Sendestrahls 9 an einer Pflanze 3a des Feldbestands 2 ergeben würde. Bei dem dargestellten und insoweit bevorzugten Ausführungsbeispiel handelt es sich bei der Normierungsbreite 18 also um die Pulsbreite 15a des ersten Teil-Echopulses 11a. Dabei wird der Einfachheit halber unterstellt, dass die Pulsbreiten 15a, 15b der beiden Teil-Echopulse 11a, 11b zueinander identisch sind.

Wie oben angesprochen, lässt sich der Wert für die Bestandsdichte grundsätzlich aus der Eindringtiefe ΔE ermitteln. Vorzugsweise ist es vorgesehen, dass der Wert für die Bestandsdichte ermittelt wird, indem der Kehrwert der Eindringtiefe ΔE des Sendestrahls 9 in den Feldbestand 2 gebildet wird und dass die Eindringtiefe ΔE aus dem Produkt des Zeitversatzes ΔTv mit der Ausbreitungsgeschwindigkeit und ggf. mit einem Normierungsfaktor ermittelt wird. Dieser Kehrwert ist dann noch mit einem Proportionalitätsfaktor zu multiplizieren, um je nach Definition der Bestandsdichte zu dem jeweils gewünschten Wert für die Bestandsdichte zu gelangen.

Fig. 2 zeigt, dass der Strahlquerschnitt des Sendestrahls 9 eine gewisse Mindesterstreckung aufweisen muss, um die vorschlagsgemäße Mehrfachreflexion des Sendestrahls 9 zu ermöglichen. Hier und vorzugsweise ist es so, dass der Sendestrahl 9 an den bezogen auf die jeweilige Senderichtung vordersten Pflanzen 3a einen rundlichen Strahlquerschnitt ausbildet, der einen Durchmesser von mehr als 10 mm, vorzugsweise von mehr als 20 mm, weiter vorzugsweise von mehr als 30 mm, aufweist. Der Begriff "Durchmesser" ist in einem erweiterten Sinne so zu verstehen, dass er bei einem elliptischen Strahlquerschnitt der Länge der Hauptachse des Querschnitts entspricht.

Bei Pflanzen 3 mit länglichen Ähren 14 ist der Messfleck vorzugsweise so ausgelegt, dass der Sendestrahl 9 an der betreffenden Ähre 14 vorbeistrahlen kann. Im Einzelnen ist es vorzugsweise so, dass die Pflanzen 3 längliche Ähren 14 mit einer mittleren Breitenerstreckung 19 ausbilden, wobei dem Sendestrahl 9 an den Ähren 14 der bezogen auf die jeweilige Senderichtung 10 vordersten Pflanzen 3a auf Grund seines Strahlquerschnitts ein Messfleck M zugeordnet ist, dessen Durchmesser 20 zumindest in einer Richtung größer, insbesondere um das mindestens zweifache größer, als die Breitenerstreckung 19 der Ähren 14 ist. Dieser Zusammenhang ist in Fig. 2 schematisch angedeutet. Fig. 2 zeigt weiter, dass der Messfleck M' im Bereich der bestandsinneren Pflanze 3b einen ausgenommenen Bereich 21 ausbildet, der sich aus der Reflexion des Teilstrahls 12, also durch die resultierende Abstrahlung, ergibt.

Für die Auslegung der Sensoranordnung 7 sind verschiedene vorteilhafte Varianten denkbar. Hier und vorzugsweise ist es so, dass die elektromagnetischen Strahlen optische Strahlen, insbesondere Laserstrahlen, sind, deren Senderichtung 10 mittels der Steuerungsanordnung 6 einstellbar ist. In besonders bevorzugter Ausgestaltung handelt es sich bei der Sensoranordnung 7 wie oben angesprochen um einen Laserscanner, der den Feldbestand 2 in horizontal ausgerichteten Zeilen abscannt.

Vorzugsweise ist die Sensoranordnung 7 ganz allgemein als optischer Abstandssensor ausgestaltet, wobei mittels der Sensoranordnung 7 aus dem zeitlichen Abstand des Sendezeitpunkts Ts eines Sendepulses 8 zu dem Empfangszeitpunkt T_{E} des zugeordneten Echopulses 11 ein Abstandswert 22 zwischen der Sensoranordnung 7 und der jeweils reflektierenden Pflanze 3a ermittelt wird. Wie weiter oben angesprochen, handelt es sich bei der Sensoranordnung 7 vorzugsweise um eine Time-of-Flight-Sensoranordnung.

Bis hierhin betrifft das vorschlagsgemäße Verfahren die Ermittlung eines Wertes für die Bestandsdichte des Feldbestands 2. Vorzugsweise ist es allerdings so, dass eine Vielzahl von Werten für die Bestandsdichte ermittelt werden, insbesondere dass der Wert für die Bestandsdichte für jeden Sendepuls 8 oder für jeden Sendepuls 8 einer Gruppe von Sendepulsen 8 ermittelt wird. Hier und vorzugsweise ist es dabei vorgesehen, dass die ermittelten Werte für die Bestandsdichte in einem statistischen Verfahren, insbesondere durch Mittelwertbildung, in einen Gesamtwert für die Bestandsdichte überführt werden.

Eine besonders hohe Flexibilität für die Erntemaschine 1 im Hinblick auf das Abernten von Feldbeständen 2 unterschiedlichen Typs wird dadurch erreicht, dass der Wert für die Bestandsdichte nach einer Berechnungsvorschrift ermittelt wird und dass die Steuerungsanordnung 6 eingerichtet ist, in Abhängigkeit vom Typ des abzuerntenden Feldbestands 2 die der Ermittlung der Bestandsdichte zu Grunde liegende Berechnungsvorschrift aus einer Anzahl gespeicherter Berechnungsvorschriften auszuwählen oder zu modifizieren. Wie weiter oben angesprochen, ist damit eine Umstellung der Erntemaschine 1 auf unterschiedliche Typen von Feldbeständen 2 möglich, ohne dass eine mechanische Anpassung vorgenommen werden muss.

Es wurde bereits darauf hingewiesen, dass es sich bei der Sensoranordnung 7 vorzugsweise um einen Laserscanner handelt. Dann ist es vorzugsweise so, dass die Senderichtung 10 der Sensoranordnung 7 mittels der Steuerungsanordnung 6 fortlaufend in horizontaler Richtung und/oder in vertikaler Richtung modifiziert wird. Bevorzugt ist dabei ein ebenfalls bereits angesprochenes, zeilenweises "Abtasten" des Feldbestands 2.

In besonders bevorzugter Ausgestaltung ist es vorgesehen, dass mittels der Steuerungsanordnung 6 aus den Abstandswerten und/oder den Werten für die Bestandsdichte eine Bestandshöhe 23 ermittelt wird. Im Falle des oben angesprochenen Laserscanners ist dabei ein zeilenweises Abtasten des Feldbestands 2 vorgesehen, wobei der Neigungswinkel α zunehmend flacher gewählt wird. Beim Erreichen der oberen Kammlinie des Feldbestands 2 ändern sich nicht nur die oben angesprochenen Abstandswerte, sondern auch die Werte für die Bestandsdichte sprunghaft, woraus sich die Lage der Kammlinie automatisiert erfassen lässt.

Alternativ oder zusätzlich kann es vorgesehen sein, dass mittels der Steuerungsanordnung 6 aus den Abstandswerten und/oder den Werten für die Bestandsdichte die Lage einer seitlichen Bestandskante 24 ermittelt wird. Auch dies lässt sich durch die automatisierte Erfassung einer sprunghaften Änderung in den betreffenden Werten bewerkstelligen.

Alternativ oder zusätzlich ist es weiter vorgesehen, dass mittels der Steuerungsanordnung 6 aus den Abstandswerten und/oder den Werten für die Bestandsdichte die Lage eines Hindernisses ermittelt wird. Auch diese Ermittlung lässt sich auf die automatisierte Erfassung einer sprunghaften Änderung der betreffenden Werte zurückführen.

Es darf abschließend noch darauf hingewiesen werden, dass mit der vorschlagsgemäßen Lösung neben der Bestandsdichte auch andere Umgebungsbedingungen ermittelt werden können, beispielsweise die Struktur des Feldbestands 2, die Kontur des Feldbestands 2, die Permeabilität der Pflanzen 3 o. dgl.

### Bezugszeichenliste

- 1: Erntemaschine
- 1a: Fahrantrieb
- 1b-h: Arbeitsaggregate
- 2: Pflanzen
- 3: Feldbestand
- 3a: vordere Pflanzen
- 3b: hinteren Pflanzen
- 4: Feldboden
- 5: Fahrtrichtung
- 6: Steuerungsanordnung
- 7: Sensoranordnung
- 8: Sendepulse
- 9: Sendestrahl
- 10: Senderichtung
- 11: Echopuls
- 11a: Teil-Echopuls
- 11b: Teilechopuls
- 12, 13: Teilstrahlen
- M: Messfleck vorne
- M': Messfleck hinten
- 14: Ähre
- 14a: vordere Ähre
- 14b: hintere Ähre
- 15: Pulsbreite
- 15a: Pulsbreite
- 15b: Pulsbreite
- 16: Pulsflanke
- 17: letzte abfallende Pulsflanke
- 18: Normierungsbreite
- 19: Breitenerstreckung
- 20: Durchmesser
- 21: ausgenommener Bereich
- 22: Abstandswert
- 23: Bestandshöhe
- 24: Bestandskante
- 25: Durchsatzmessanordnung

## Patentansprüche

1. Selbstfahrende Erntemaschine zum Abernten eines Feldbestands (2) aus einer Mehrzahl von Pflanzen (3), mit einem Fahrantrieb (1a), mit mehreren Arbeitsaggregaten (1b-h), mit einer Steuerungsanordnung (6) und mit einer Sensoranordnung (7), wobei die Sensoranordnung (7) eingerichtet ist periodisch Sendepulse (8) aus elektromagnetischen Sendestrahlen (9) in mindestens einer Senderichtung (10) auf den Feldbestand (2) auszusenden, wobei die Sendepulse (8) am Feldbestand (2) reflektiert und als Echopulse (11) von der Sensoranordnung (7) empfangen werden,
**dadurch gekennzeichnet, dass** die Sensoranordnung derart eingerichtet ist, dass für zumindest einen Teil der Sendepulse (8) unterschiedliche Teilstrahlen (12, 13) ein und desselben Sendestrahls (9) von in der jeweiligen Senderichtung (10) hintereinanderliegenden Pflanzen (3) des Feldbestands (2) zueinander zeitversetzt reflektiert werden, so dass sich der jeweils resultierende Echopuls (11) aus entsprechend zeitversetzten Teil-Echopulsen (11a, 11b) zusammensetzt, dass die Steuerungsanordnung (6) eingerichtet ist basierend auf einem zeitlichen Zusammenhang innerhalb des resultierenden Echopulses (11) einen Wert für die Bestandsdichte zu ermitteln, wobei die Mehrfachreflexion des Sendepulses (8) an den hintereinanderliegenden Pflanzen (3) ein Maß für die Eindringlänge (ΔE) des Sendestrahls (9) in den Feldbestand liefert, von der ein Wert für die Bestandsdichte des Feldbestands abgeleitet wird, wobei der Stahlquerschnitt eine Mindesterstreckung aufweist, die eine Mehrfachreflexion ermöglicht und dass die Steuerungsanordnung (6) eingerichtet ist den Fahrantrieb (1a) und/oder die Arbeitsaggregate (11b-h) basierend auf der ermittelten Bestandsdichte anzusteuern.

2. Selbstfahrende Erntemaschine nach Anspruch 1, **dadurch gekennzeichnet, dass** Steuerungsanordnung (6) eingerichtet ist den Fahrantrieb (1a) und/oder die Arbeitsaggregate (1a-h) basierend auf der ermittelten Bestandsdichte vorausschauend anzusteuern, indem die Steuerungsanordnung (6) zumindest einen Teil der Ansteuerung vornimmt, bevor der der Ermittlung der Bestandsdichte zugrundeliegende Feldbestand (2) in die Erntemaschine (1) einläuft.

3. Selbstfahrende Erntemaschine nach Anspruch 1 oder 2, **dadurch gekennzeichnet, dass** die Sensoranordnung (6) einen Laserscanner aufweist, der an der Erntemaschine (1) angeordnet ist und der in einem Neigungswinkel (a) gegenüber der Horizontalen und in einem Scanwinkel (β) gegenüber der Fahrtrichtung (5) um die Vertikale die Sendestrahlen (9) auf den Feldbestand (2) richtet.

4. Selbstfahrende Erntemaschine nach einem der vorhergehenden Ansprüche, **dadurch gekennzeichnet, dass** die Erntemaschine (1) eine Durchsatzmessanordnung (25), insbesondere eine Schichthöhenmessanordnung, zur Ermittlung eines Durchsatzes aufweist und dass die Steuerungsanordnung (6) eingerichtet ist den ermittelten Durchsatz mit der ermittelten Bestandsdichte abzugleichen.

5. Selbstfahrende Erntemaschine nach einem der vorhergehenden Ansprüche, **dadurch gekennzeichnet, dass** der zeitliche Zusammenhang ein Zeitversatz (ΔT_{V}) zwischen zwei Teil-Echopulsen (11a, 11b), insbesondere zwischen dem ersten Teil-Echoimpuls (11a) und dem letzten Teil-Echopuls (11b), ist, die einem Sendepuls (9) zugeordnet sind.

6. Selbstfahrende Erntemaschine nach Anspruch 5, **dadurch gekennzeichnet, dass** der Zeitversatz (ΔT_{V}) aus der Pulsbreite (15) des resultierenden Echopulses (11) ermittelt wird und dass die Pulsbreite (15) durch den zeitlichen Abstand zwischen der ersten ansteigenden Pulsflanke (16) und der letzten abfallenden Pulsflanke (17) des Echopulses (11) definiert ist.

7. Selbstfahrende Erntemaschine nach einem der vorhergehenden Ansprüche 5 - 6, **dadurch gekennzeichnet, dass** der Zeitversatz (ΔT_{V}) ermittelt wird, indem von der Pulsbreite (15) eine Normierungsbreite (18) subtrahiert wird, und dass die Normierungsbreite (18) definiert ist durch die Pulsbreite (15) des resultierenden Echopulses (11), die sich bei einer unterstellten Einfachreflexion des Sendestrahls (9) an einer Pflanze (3a) des Feldbestands (2) ergeben würde.

8. Selbstfahrende Erntemaschine nach einem der vorhergehenden Ansprüche 5 - 7, **dadurch gekennzeichnet, dass** der Wert für die Bestandsdichte ermittelt wird, indem der Kehrwert einer Eindringtiefe (ΔE) des Sendestrahls (9) in den Feldbestand (2) gebildet wird und dass die Eindringtiefe (ΔE) aus dem Produkt des Zeitversatzes (ΔT_{V}) mit der Ausbreitungsgeschwindigkeit und ggf. mit einem Normierungsfaktor ermittelt wird.

9. Selbstfahrende Erntemaschine nach einem der vorhergehenden Ansprüche, **dadurch gekennzeichnet, dass** der Sendestrahl (9) eingerichtet ist an den bezogen auf die jeweilige Senderichtung (10) vordersten Pflanzen (3a) einen rundlichen Strahlquerschnitt auszubilden, der einen Durchmesser von mehr als 10mm, vorzugsweise von mehr als 20mm, weiter vorzugsweise von mehr als 30mm, aufweist.

10. Selbstfahrende Erntemaschine nach einem der vorhergehenden Ansprüche, **dadurch gekennzeichnet, dass** die Pflanzen (3) längliche Ähren (14) ausbilden und dass dem Sendestrahl (9) an den Ähren (14) der bezogen auf die jeweilige Senderichtung (10) vordersten Pflanzen (3a) aufgrund seines Strahlquerschnitts ein Messfleck (M) zugeordnet ist, dessen Durchmesser (20) zumindest in einer Richtung so ausgelegt ist, dass der Sendestrahl (9) an der betreffenden Ähre (14) vorbeistrahlen kann.

11. Selbstfahrende Erntemaschine nach einem der vorhergehenden Ansprüche, **dadurch gekennzeichnet, dass** die Sensoranordnung (7) als optischer Abstandssensor ausgestaltet ist, und dass die Sensoranordnung (7) eingerichtet ist aus dem zeitlichen Abstand des Sendezeitpunkts (T_{S}) eines Sendepulses (8) zu dem Empfangszeitpunkt (T_{E}) des zugeordneten Echopulses (11) einen Abstandswert (22) zwischen der Sensoranordnung (7) und der jeweils reflektierenden Pflanze (3) zu ermitteln.

12. Selbstfahrende Erntemaschine nach einem der vorhergehenden Ansprüche, **dadurch gekennzeichnet, dass** der Wert für die Bestandsdichte für jeden Sendepuls (8) oder für jeden Sendepuls (8) einer Gruppe von Sendepulsen (8) ermittelt wird und dass die ermittelten Werte der Bestandsdichte in einem statistischen Verfahren, insbesondere durch Mittelwertbildung, in einen Gesamtwert für die Bestandsdichte überführt werden.

13. Selbstfahrende Erntemaschine nach einem der vorhergehenden Ansprüche, **dadurch gekennzeichnet, dass** der Wert für die Bestandsdichte nach einer Berechnungsvorschrift ermittelt wird und dass die Steuerungsanordnung (6) eingerichtet ist, in Abhängigkeit vom Typ des abzuerntenden Feldbestands (2) die der Ermittlung der Bestandsdichte zugrundeliegende Berechnungsvorschrift aus einer Anzahl gespeicherter Berechnungsvorschriften auszuwählen oder zu modifizieren.

14. Selbstfahrende Erntemaschine nach einem der vorhergehenden Ansprüche, **dadurch gekennzeichnet, dass** die Steuerungsanordnung (6) eingerichtet ist aus den Abstandswerten und/oder den Werten für die Bestandsdichte eine Bestandshöhe (23) zu ermitteln, und/oder aus den Abstandswerten und/oder den Werten für die Bestandsdichte die Lage einer Bestandskante (24) zu ermitteln, und/oder aus den Abstandswerten und/oder den Werten für die Bestandsdichte die Lage eines Hindernisses zun ermitteln.

## Claims

1. A self-propelled harvesting machine for cutting down a field crop (2) formed by a plurality of plants (3), with a propulsion unit (1a), with a plurality of working units (1b-h), with a control system (6) and with a sensor system (7), wherein the sensor system (7) is configured to periodically emit transmitted pulses (8) of electromagnetic transmitted beams (9) in at least one transmission direction (10) onto the field crop (2), wherein the transmitted pulse (8) is reflected at the field crop (2) and received by the sensor system (7) as echo pulses (11),
**characterized in that** the sensor system is arranged such that for at least a portion of the transmitted pulses (8), different part beams (12, 13) of one and the same transmitted beam (9) are reflected by plants (3) of the field crop (2) which are positioned one behind the other in the respective transmission direction (10) in a time-offset manner, so that the respective resulting echo pulse (11) is composed of corresponding time-offset partial echo pulses (11a, 11b), **in that** the control system (6) is configured to determine a value for the crop density based on a temporal correlation within the resulting echo pulse (11), wherein the multiple reflection of the transmitted pulse (8) at the plants (3) which are positioned one behind the other provides a measure of the penetration length (ΔE) of the transmitted beam (9) into the field crop, from which a value for the crop density of the field crop is derived, wherein the beam cross section has a minimum extent, which permits multiple reflection, and **in that** the control system (6) is configured to control the propulsion unit (1a) and/or the working units (11b-h) on the basis of the determined crop density.

2. The self-propelled harvesting machine according to claim 1, **characterized in that** the control system (6) is configured to control the propulsion unit (1a) and/or the working units (1a-h) proactively on the basis of the determined crop density, in which the control system (6) carries out at least part of the control before the field crop (2) forming the basis of the crop density determination is fed into the harvesting machine (1).

3. The self-propelled harvesting machine according to claim 1 or claim 2, **characterized in that** the sensor system (6) comprises a laser scanner which is disposed on the harvesting machine (1) and which is orientated to direct the transmitted beams (9) onto the field crop (2) at an angle of inclination (a) with respect to the horizontal and at a scanning angle (β) to the vertical with respect to the direction of travel (5).

4. The self-propelled harvesting machine according to one of the preceding claims, **characterized in that** the harvesting machine (1) has a throughput measuring system (25), in particular a crop level measuring system, for determining a throughput, and **in that** the control system (6) is configured to align the determined throughput with the determined crop density.

5. The self-propelled harvesting machine according to one of the preceding claims, **characterized in that** the temporal correlation is a time offset (ΔT_{V}) between two partial echo pulses (11a, 11b), in particular between the first partial echo pulse (11a) and the last partial echo pulse (11b), which are associated with a transmitted pulse (9).

6. The self-propelled harvesting machine according to claim 5, **characterized in that** the time offset (ΔT_{V}) is determined from the pulse width (15) of the resultant echo pulse (11), and **in that** the pulse width (15) is defined by the time lag between the first rising pulse edge (16) and the last falling pulse edge (17) of the echo pulse (11).

7. The self-propelled harvesting machine according to one of the preceding claims 5 - 6, **characterized in that** the time offset (ΔT_{V}) is determined by subtracting a normalization width (18) from the pulse width (15), and **in that** the normalization width (18) is defined by the pulse width (15) of the resultant echo pulse (11) which would result in the case of an assumed single reflection of the transmitted beam (9) from a plant (3a) of the field crop (2).

8. The self-propelled harvesting machine according to one of the preceding claims 5 - 7, **characterized in that** the value for the crop density is determined by forming a reciprocal value of a penetration depth (ΔE) of the transmitted beam (9) into the field crop (2), and **in that** the penetration depth (ΔE) is determined from the product of the time offset (ΔT_{V}) and the propagation speed and, if appropriate, a normalization factor.

9. The self-propelled harvesting machine according to one of the preceding claims, **characterized in that** the transmitted beam (9) is configured to form a round beam cross-section at the plants (3a) located furthest forward with respect to the respective transmission direction (10) with a diameter of more than 10 mm, preferably more than 20 mm, more preferably more than 30 mm.

10. The self-propelled harvesting machine according to one of the preceding claims, **characterized in that** the plants (3) form elongate ears (14), and **in that** at the ears (14) of the plants (3a) located furthest forward with respect to the respective transmission direction (10), a measurement spot (M) is associated with the transmitted beam (9) on the basis of its beam cross section, the diameter (20) of the spot in at least one direction being configured such that the transmitted beam (9) can pass by the ears (14) in question.

11. The self-propelled harvesting machine according to one of the preceding claims, **characterized in that** the sensor system (7) is conformed as an optical distance sensor, and **in that** the sensor system (7) is configured to determine a distance value (22) between the sensor system (7) and the respective reflecting plant (3) from the time lag of the point in time of the transmission (Ts) of a transmitted pulse (8) to the point in time of reception (T_{E}) of the associated echo pulse (11).

12. The self-propelled harvesting machine according to one of the preceding claims, **characterized in that** the value for the crop density for each transmitted pulse (8) or for each transmitted pulse (8) of a group of transmitted pulses (8) is determined, and **in that** the determined values for the crop density are converted in a statistical method, in particular by averaging, into a total value for the crop density.

13. The self-propelled harvesting machine according to one of the preceding claims, **characterized in that** the value for the crop density is determined in accordance with a calculation rule, and **in that** the control system (6) is configured to select or modify the calculation rule forming the basis for the determination of the crop density from a number of stored calculation rules as a function of the type of field crop (2) to be harvested.

14. The self-propelled harvesting machine according to one of the preceding claims, **characterized in that** the control system (6) is configured to determine a crop height (23) from the distance values and/or the values for the crop density, and/or to determine the position of a crop edge (24) from the distance values and/or the values for the crop density, and/or to determine the position of an obstacle from the distance values and/or the values for the crop density.

## Revendications

1. Machine de récolte automotrice pour récolter une culture en champ (2) composée d'une pluralité de plantes (3), comprenant un ensemble propulseur (1a), comprenant plusieurs organes de travail (1b-h), comprenant un agencement de commande (6) et comprenant un agencement de capteur (7), l'agencement de capteur (7) étant agencé pour émettre périodiquement des impulsions d'émission (8) constituées de rayons d'émission électromagnétiques (9) dans au moins une direction d'émission (10) vers la culture en champ (2), les impulsions d'émission (8) étant réfléchies au niveau de la culture en champ (2) et reçues par l'agencement de capteur (7) en tant qu'impulsions d'écho (11), **caractérisée en ce que** l'agencement de capteur est agencé de façon que, pour au moins une partie des impulsions d'émission (8), des rayons partiels différents (12, 13) d'un même rayon d'émission (9) sont réfléchis avec un décalage temporel les uns par rapport aux autres par des plantes (3) de la culture en champ (2) situées les unes derrière les autres dans la direction d'émission respective (10), de sorte que l'impulsion d'écho respective résultante (11) se compose d'impulsions d'écho partielles (11a, 11b) présentant un décalage temporel correspondant, **en ce que** l'agencement de commande (6) est agencé pour déterminer une valeur de la densité de culture sur la base d'un rapport temporel à l'intérieur de l'impulsion d'écho résultante (11), la réflexion multiple de l'impulsion d'émission (8) au niveau des plantes situées les unes derrière les autres (3) fournissant une mesure de la longueur de pénétration (ΔE) du rayon d'émission (9) dans la culture en champ, de laquelle est déduite une valeur de la densité de culture de la culture en champ, la section transversale de rayon présentant une extension minimale qui permet une réflexion multiple, et **en ce que** l'agencement de commande (6) et/ou les organes de travail (11b-h) sont agencés pour commander l'ensemble propulseur (1a) et/ou les organes de travail (11b-h) sur la base de la densité de culture déterminée.

2. Machine de récolte automotrice selon la revendication 1, **caractérisée en ce que** l'agencement de commande (6) est agencé pour commander par anticipation l'ensemble propulseur (1a) et/ou les organes de travail (1a-h) sur la base de la densité de culture déterminée, par le fait que l'agencement de commande (6) effectue au moins une partie de la commande avant que la culture en champ (2) servant de base à la détermination de la densité de culture ne pénètre dans la machine de récolte (1).

3. Machine de récolte automotrice selon la revendication 1 ou 2, **caractérisée en ce que** l'agencement de capteur (6) comporte un scanner laser qui est disposé sur la machine de récolte (1) et qui dirige les rayons d'émission (9) vers la culture en champ (2) selon un angle d'inclinaison (α) par rapport à l'horizontale et selon un angle de scannage (β) par rapport au sens de marche (5) autour de la verticale.

4. Machine de récolte automotrice selon une des revendications précédentes, **caractérisée en ce que** la machine de récolte (1) comporte un agencement de mesure de débit (25), en particulier un agencement de mesure de hauteur de couche, pour déterminer un débit, et **en ce que** l'agencement de commande (6) est agencé pour compenser le débit déterminé avec la densité de culture déterminée.

5. Machine de récolte automotrice selon une des revendications précédentes, **caractérisée en ce que** le rapport temporel est un décalage temporel (ΔT_{V}) entre deux impulsions d'écho partielles (11a, 11b), en particulier entre la première impulsion d'écho partielle (11a) et la dernière impulsion d'écho partielle (11b), qui sont associées à une impulsion d'émission (9).

6. Machine de récolte automotrice selon la revendication 5, **caractérisée en ce que** le décalage temporel (ΔT_{V}) est déterminé à partir de la largeur d'impulsion (15) de l'impulsion d'écho résultante (11) et **en ce que** la largeur d'impulsion (15) est définie par la distance temporelle entre le premier flanc d'impulsion ascendant (16) et le dernier flanc d'impulsion descendant (17) de l'impulsion d'écho (11) .

7. Machine de récolte automotrice selon une des revendications précédentes 5-6, **caractérisée en ce que** le décalage temporel (ΔT_{V}) est déterminé par le fait que de la largeur d'impulsion (15) est soustraite une largeur de normation (18), et **en ce que** la largeur de normation (18) est définie par la largeur d'impulsion (15) de l'impulsion d'écho résultante (11) qui serait obtenue en cas de réflexion simple supposée du rayon d'émission (9) au niveau d'une plante (3a) de la culture en champ (2).

8. Machine de récolte automotrice selon une des revendications précédentes 5-7, **caractérisée en ce que** la valeur de la densité de culture est déterminée par le fait que la valeur réciproque d'une profondeur de pénétration (ΔE) du rayon d'émission (9) dans la culture en champ (2) est formée et **en ce que** la profondeur de pénétration (ΔE) est déterminée à partir du produit du décalage temporel (ΔT_{V}) par la vitesse de propagation et le cas échéant par un facteur de normation.

9. Machine de récolte automotrice selon une des revendications précédentes, **caractérisée en ce que** le rayon d'émission (9) est agencé pour former, au niveau des plantes (3a) les plus à l'avant par rapport à la direction d'émission respective (10), une section transversale de rayon ronde qui présente un diamètre de plus de 10 mm, de préférence de plus de 20 mm, plus préférentiellement de plus de 30 mm.

10. Machine de récolte automotrice selon une des revendications précédentes, **caractérisée en ce que** les plantes (3) forment des épis allongés (14), et **en ce qu'**au rayon d'émission (9) est associé, au niveau des épis (14) des plantes (3a) les plus à l'avant par rapport à la direction d'émission respective (10), en raison de sa section transversale de rayon, un spot de mesure (M) dont le diamètre (20) au moins dans une direction est conçu de façon que le rayon d'émission (9) puisse balayer l'épi concerné (14).

11. Machine de récolte automotrice selon une des revendications précédentes, **caractérisée en ce que** l'agencement de capteur (7) est conformé en capteur de distance optique, et **en ce que** l'agencement de capteur (7) est agencé pour déterminer, à partir de la distance temporelle du moment d'émission (Ts) d'une impulsion d'émission (8) au moment de réception (T_{E}) de l'impulsion d'écho associée (11), une valeur de distance (22) entre l'agencement de capteur (7) et la plante réfléchissante respective (3).

12. Machine de récolte automotrice selon une des revendications précédentes, **caractérisée en ce que** la valeur de la densité de culture est déterminée pour chaque impulsion d'émission (8) ou pour chaque impulsion d'émission (8) d'un groupe d'impulsions d'émission (8), et **en ce que** les valeurs déterminées de densité de culture sont transformées en une valeur globale de densité de culture par une opération statistique, en particulier par moyennage.

13. Machine de récolte automotrice selon une des revendications précédentes, **caractérisée en ce que** la valeur de la densité de culture est déterminée selon une consigne de calcul, et **en ce que** l'agencement de commande (6) est agencé pour sélectionner ou modifier, en fonction du type de culture en champ à récolter (2), la consigne de calcul à prendre en compte pour déterminer la densité de culture à partir d'une pluralité de consignes de calcul mémorisées.

14. Machine de récolte automotrice selon une des revendications précédentes, **caractérisée en ce que** l'agencement de commande (6) est agencé pour déterminer une hauteur de culture (23) à partir des valeurs de distance et/ou des valeurs de densité de culture et/ou la position d'un bord de culture (24) à partir des valeurs de distance et/ou des valeurs de densité de culture et/ou la position d'un obstacle à partir des valeurs de distance et/ou des valeurs de densité de culture.
